Europäisches Patentamt

European Patent Office

Office européen des brevets

(19)

(11) **EP 1 371 181 B1**

(12) **EUROPÄISCHE PATENTSCHRIFT**

(45) Veröffentlichungstag und Bekanntmachung des Hinweises auf die Patenterteilung:
**08.09.2004  Patentblatt 2004/37**

(51) Int Cl.⁷: **H04L 12/403**, H04J 3/06, G06F 1/08

(21) Anmeldenummer: **02729771.2**

(22) Anmeldetag: **13.03.2002**

(86) Internationale Anmeldenummer:
**PCT/DE2002/000872**

(87) Internationale Veröffentlichungsnummer:
**WO 2002/076031 (26.09.2002 Gazette 2002/39)**

(54) **SYNCHRONISATION WENIGSTENS EINES TEILNEHMERS EINES BUSSYSTEMS**

METHOD AND DEVICE FOR SYNCHRONIZING AT LEAST ONE NODE OF A BUS SYSTEM AND A CORRESPONDING BUS SYSTEM

PROCEDE ET DISPOSITIF DE SYNCHRONISATION D'AU MOINS UN NOEUD D'UN SYSTEME DE BUS ET SYSTEME DE BUS

(84) Benannte Vertragsstaaten:
**AT BE CH CY DE DK ES FI FR GB GR IE IT LI LU MC NL PT SE TR**

(30) Priorität: **15.03.2001  DE 10112908**
**28.02.2002  DE 10208650**

(43) Veröffentlichungstag der Anmeldung:
**17.12.2003  Patentblatt 2003/51**

(73) Patentinhaber: **Robert Bosch GmbH**
**70422 Stuttgart (DE)**

(72) Erfinder:
• **FUEHRER, Thomas**
**70839 Gerlingen (DE)**
• **MUELLER, Bernd**
**71229 Leonberg (DE)**
• **HARTWICH, Florian**
**72762 Reutlingen (DE)**
• **HUGEL, Robert**
**76199 Karlsruhe (DE)**

(56) Entgegenhaltungen:
**US-A- 5 070 517**

• **FUEHRER T ET AL: "TIME TRIGGERED COMMUNICATION ON CAN (TIME TRIGGERED CAN - TTCAN)" PROCEEDINGS OF THE INTERNATIONAL CAN CONFERENCE, XX, XX, 2000, Seiten 1-7, XP002905415**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zur Synchronisation wenigstens eines Teilnehmers eines Bussystems, sowie ein Bussystem gemäß den unabhängigen Ansprüchen.

Die Vernetzung von Steuergeräten, Sensorik und Aktuatorik mit Hilfe eines Kommunikationssystems, eines Bussystems hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Stationen findet mehr und mehr über einen Bus bzw. ein Bussystem statt. Der Kommunikationsverkehr auf dem Bussystem, Zugriffs- und Empfangsmechanismen sowie Fehlerbehandlung werden über ein Protokoll geregelt.

Als Protokoll im Kfz-Bereich etabliert ist der CAN (Controller Area Network). Dieses ist ein ereignisgesteuertes Protokoll, d. h. Protokollaktivitäten wie das Senden einer Nachricht werden durch Ereignisse iniziiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Voraussetzung dafür ist, dass jeder Nachricht eine eindeutige Priorität zugewiesen ist. Das CAN-Protokoll ist sehr flexibel; ein Hinzufügen weiterer Knoten und Nachrichten ist damit problemlos möglich, so lange es noch freie Prioritäten (message identifier) gibt. Die Sammlung aller im Netzwerk zu sendenden Nachrichten mit Prioritäten und deren Senderknoten sowie möglicherweise Empfangsknoten werden in einer Liste, der sogenannten Kommunikationsmatrix abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Nachricht werden nur durch das Fortschreiten einer für das gesamte Bussystem gültigen Zeit ausgelöst. Der Zugang zum Medium basiert auf der Zuteilung von Zeitbereichen, in denen ein Sender exklusives Senderecht hat. Das Protokoll ist vergleichsweise unflexibel; ein Hinzufügen von neuen Knoten ist nur dann möglich, wenn zuvor schon die entsprechenden Zeitbereiche freigelassen wurden. Dieser Umstand erzwingt, die Nachrichtenreihenfolge schon vor Inbetriebnahme festzusetzen. Es wird also ein Fahrplan erstellt, der den Anforderungen der Nachrichten bezüglich Wiederholrate, Redundanz, deadlines usw. genügen muss. Man spricht vom sogenannten "bus schedule". Die Positionierung der Nachrichten innerhalb der Sendeperioden muss auf die Applikationen abgestimmt werden, die die Nachrichteninhalte produzieren, um die Latenzen zwischen Applikation und Sendezeitpunkt minimal zu halten. Wenn diese Abstimmung nicht erfolgt, würde der Vorteil der zeitgesteuerten Übermittlung (minimale Latenz-Jitter beim Senden der Nachricht am Bus) zerstört. Es werden so hohe Anforderungen an die Planungstools gestellt.

Der in den Patentanmeldungen DE 100 00 302 A1, DE 100 00 303 A1, DE 100 00 304 A1 und DE 100 00 305 A1 gezeigte Lösungsansatz des zeitgesteuerten CAN, dem sogenannten TTCAN (Time Triggered Controller Area Network) genügt den oben skizzierten Forderungen nach zeitgesteuerter Kommunikation sowie den Forderungen nach einem gewissen Maß an Flexibilität. TTCAN erfüllt dies durch den Aufbau der Kommunikationsrunde (basic cycle) in sogenannte exklusive Zeitfenster für periodische Nachrichten bestimmter Kommunikationsteilnehmer und in sogenannte arbitrierende Zeitfenster für spontane Nachrichten mehrerer Kommunikationsteilnehmer.

Im Weiteren wird von einem TTCAN-Netzwerk als Bussystem ausgegangen, wobei dies nicht als einschränkend bezüglich des späteren Gegenstands der Erfindung zu verstehen ist. Vielmehr ist der Gegenstand der später erläuterten Erfindung auch bei weiteren, vergleichbaren Bussystemen einsetzbar.

Dabei muss beispielsweise in vernetzten Steuergeräten in der Automatisierung, im Kraftfahrzeug und in anderen Einsatzgebieten aus den verschiedenen internen, lokalen Takten der Teilnehmer, insbesondere der Steuergeräte, ein einheitlicher Takt für das Kommunikationsnetzwerk, also das Bussystem abgeleitet werden bzw. müssen die einzelnen Ausgangstakte der Teilnehmer auf einen solchen einheitlichen gemeinsamen Netzwerktakt z. B. die Network Time Unit NTU für TTCAN synchronisiert werden.

Dokument US 5 070 517 offenbart ein Verfahren zur Synchronisation eines Busteilnehmers in dem der Teilungsfaktor zur Synchronisation der lokalen Taktperiode der Systemtaktperiode angepasst wird.

Das übliche Verfahren, um aus einem Referenztakt und einem insbesondere schnelleren Systemtakt einen auf den Referenztakt bzw. den Systemtakt angeglichenen lokalen Takt zu bilden, beruht darauf, dass abgezählt wird, wieviel Systemtaktperioden in einer bestimmten Anzahl von Referenztaktperioden, der sogenannten Messperiode, enthalten sind. Der Zählwert gibt dann vor, aus wieviel Systemtaktperioden der anzugleichende lokale Takt gebildet wird. Dabei ist die Messperiode üblicherweise konstant auf Werte von $2^n$ Referenztaktperioden beschränkt ($n \in \mathbb{N}_0$). Diese Angleichung oder Synchronisierung erfolgt dabei durch Festlegung eines Teilungsfaktors, der mit dem lokalen Takt verknüpft wird, um einen synchronisierten lokalen Takt zu erzeugen. Dazu ist die Realisierung von Multiplikation und Divisionen zur Bestimmung des neuen Teilungsfaktors nötig. Insbesondere bei einer Realisierung in Hardware ist die Darstellung von Multiplikationen und Divisionen sehr aufwendig.

Somit ist es Ziel der Erfindung, ein allgemeines Verfahren, eine Vorrichtung bzw. ein entsprechendes Bussystem anzugeben, durch welches eine Synchronisation eines Teilnehmers, also eine Angleichung eines lokalen Taktes bzw. einer lokalen Taktperiode eines solchen Teilnehmers, auf einfache Art und Weise vorgenommen werden kann, ohne dass die Länge der Messperiode konstant bleiben muss bzw. auf bestimmte Werte beschränkt ist.

Vorteile der Erfindung

Durch die Erfindung wird ein allgemeines Verfahren sowie eine Vorrichtung und ein entsprechendes Bussystem beschrieben, durch die eine Angleichung eines lokalen Taktes auf einen Referenztakt bzw. den Systemtakt auf einfache Weise, insbesondere ohne Multiplikation oder Division vorzunehmen, wodurch eine Angleichung, also eine Synchronisierung eines lokalen Taktes bzw. einer lokalen Taktperiode bzw. der lokalen Darstellung des Netzwerktaktes an einen Referenz- bzw. Systemtakt mit geringerem Hardwareaufwand, wodurch insbesondere eine Integration in einem IC (Integrated Circuit) deutlich erleichtert wird.

Außerdem sind die Längen der Messperioden im Weiteren als "Messzeitfenster" bezeichnet, in denen die Abweichungen zwischen dem Referenztakt bzw. der Referenztaktperiode und dem anzugleichenden lokalen Takt bzw. der lokalen Taktperiode gemessen werden, zum Einen wechseln dürfen, also nicht konstant sein müssen, und zum Anderen nicht auf bestimmte vorgegebene Werte beschränkt sind.

Dies wird erreicht durch ein Verfahren und eine Vorrichtung sowie ein Bussystem mit einer Vorrichtung zur Synchronisation wenigstens eines Teilnehmers eines Bussystems, welches mit einer vorgebbaren Systemtaktperiode (NTU) betrieben wird, wobei eine lokale Taktperiode (L_NTU) und eine Referenztaktperiode (G_NTU) für den wenigstens einen Teilnehmer vorgegeben wird und die Referenztaktperiode (G_NTU) mit der Systemtaktperiode (NTU) synchronisiert ist, wobei eine zur Systemtaktperiode (NTU) synchronisierte, lokale Taktperiode (SL_NTU) des wenigstens einen Teilnehmers dadurch erzeugt wird, dass die lokale Taktperiode (L_NTU) mit einem Teilungsfaktor oder Prescaler (P) verknüpft wird, wobei der Teilungsfaktor oder Prescaler (P) ein Verhältnis der Referenztaktperiode (G_NTU) zur lokalen Taktperiode (L_NTU) wiedergibt, wobei vorteilhafter Weise der Teilungsfaktor, also Prescaler (P) zur Synchronisation der lokalen Taktperiode (L_NTU) mit der Systemtaktperiode (NTU) durch Addition oder Subtraktion eines Angleichungswertes oder Offsets (O) angepasst wird. D. h. je nachdem, ob der Offset, also der Angleichungswert O größer oder kleiner 0 ist, erfolgt eine Addition oder Subtraktion dieses Angleichungswertes. Im speziellen Fall, dass eine Angleichung nicht nötig ist, kann sich als Angleichungswert oder Offset der Wert 0 ergeben.

Dabei wird vorteilhafter Weise durch ein wiederkehrendes Ereignis, welches aber nicht zwangsweise periodisch wiederkehren muss, ein Messzeitfenster MT vorgegeben, wobei dieses Messzeitfenster MT einerseits in einer Anzahl lokaler Taktperioden LTN. als Einheit als erstes lokales Messfenster als Local_Period und in einer Anzahl von Referentaktperioden G_NTU als weitere Einheit als zweites globales Messfenster, als Global_Period, erfasst wird, wobei aus dem ersten Messfenster, also der Local_Period und dem zweiten Messfenster, der Global_Period eine Differenz Period_Diff ermittelt wird, wobei der Angleichungswert oder Offset O mit Hilfe dieser Differenz Period_Diff bestimmt wird.

Vorteilhafter Weise wird der Offset O zusätzlich von einem Verhältnis des Teilungsfaktors oder Prescalers P zu dem zweiten Messfenster, der Global_Period, abhängig bestimmt, wobei das Verhältnis unter Verwendung dualer Logarithmen dargestellt wird, was vorteilhafter Weise eine Rundung des dualen Logarithmus des Teilungsfaktors LDP ist und des dualen Logarithmus des zweiten Messfensters LD global period derart ermöglicht, dass in binärer Darstellung anstelle des vollständigen dualen Logarithmus der Wert der höchstwertigen Stelle in binärer Darstellung verwendet wird, wodurch sich dann zweckmäßiger Weise eine Differenz DLD entsprechend der jeweils höchstwertigen Stelle des abgerundeten Wertes für den Teilungsfaktor LDPR und des abgerundeten Wertes des zweiten Messfensters, LDGB, ergibt.

Durch ein solches Vorgehen der Umsetzung in duale Logarithmen und der Rundung kann einerseits ein Überschwingen vermieden und eine bessere Konvergenz des Verfahrens erzielt werden.

Zweckmäßiger Weise wird die Differenz DLD des abgerundeten Wertes für den Teilungsfaktor LDPR und des abgerundeten Wertes für das zweite Messfenster LDGP aus einer Gleichung 19: DLD = (LDPR - LDGP) - 1 gebildet.

Eine vorteilhafte weitere Steigerung der Konvergenz kann dadurch erzielt werden, dass die Differenz DLD aus einer Gleichung 20: DLD = (LDPR - LDGP) gebildet wird.

Vorteilhafter Weise wird der Angleichungswert oder Offset O derart gebildet, dass die Differenz des ersten und zweiten Messfensters, also die Period_Diff in binärer Darstellung um einzelne Stellen der binären Darstellung entsprechend der Differenz DLD der abgerundeten Werte für Teilungsfaktor und zweites Messfenster LDPR und LDGP im Falle einer positiven Differenz DLD in Richtung der höchstwertigen Stelle oder im Falle einer negativen Differenz in Richtung der niedrigstwertigen Stelle verschoben wird. Dadurch sind vorteilhafter Weise Multiplikationen und Divisionen in Addition und Schiebefunktion umgesetzt, was eine einfache und somit kostengünstige Implementierung in Hardware, insbesondere in einen IC ermöglicht.

Durch das erfindungsgemäße Verfahren bzw. die entsprechende Vorrichtung und Bussystem wird außerdem vorteilhafter Weise eine Plausibilitätsüberprüfung derart durchführbar, dass der Offset 0 und/oder die Summe des Offsets und des Prescalers P und/oder die Differenz des Offsets O und des Prescalers P mit wenigstens einem vorgebbaren Schwellwert verglichen werden kann.

Dabei kann der wenigstens eine vorgebbare Schwellwert beispielsweise als Maximalwert vorgegeben werden, wobei bei Erreichen und/oder Überschreiten dieses Maximalwertes entweder eine weitere Synchronisation durch Anpassung des Offsets O unterbleibt oder der Offset und/oder die Summe des Offsets O sowie des Prescalers, also Teilungsfaktors P auf den Maximalwert begrenzt wird.

Ebenso kann vorteilhafter Weise der wenigstens eine vorgebbare Schwellwert als Minimalwert vorgegeben werden und bei Erreichen und/oder Unterschreiten dieses Minimalwertes wird eine weitere Synchronisation durch Anpassung des Offsets O nicht durchgeführt oder es wird der Angleichungswert, also der Offset O und/oder die Differenz des Offsets und des Teilungsfaktors, also des Prescalers P auf den Minimalwert selbst begrenzt.

Weitere Vorteile und vorteilhafte Ausgestaltungen ergeben sich aus der Beschreibung und den Merkmalen der Ansprüche.

Zeichnung

Die Erfindung wird im Weiteren anhand der in der Zeichnung dargestellten Figuren näher erläutert.

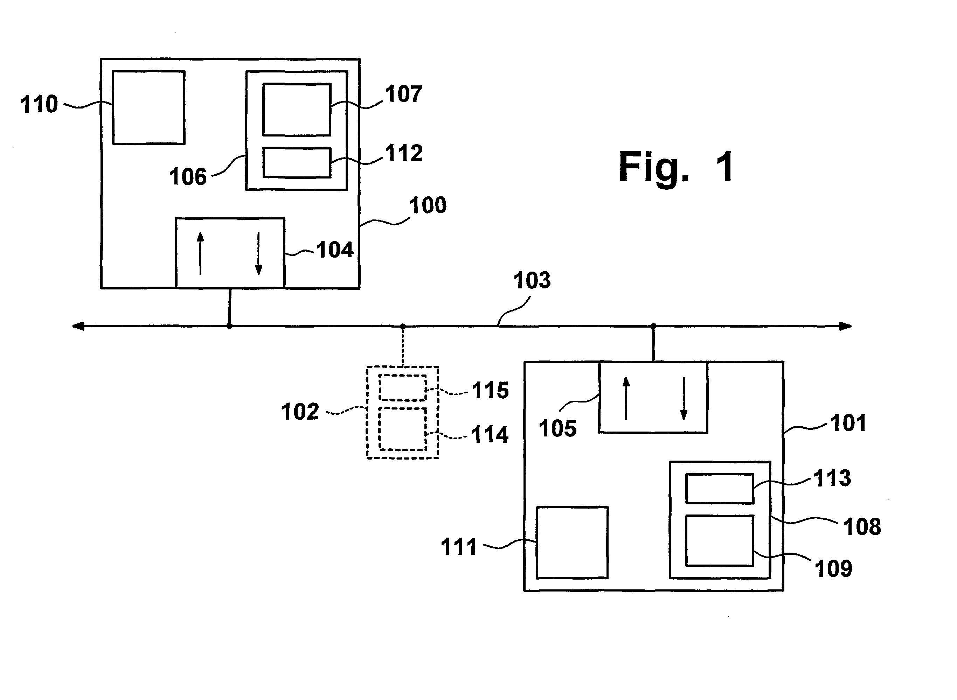

Dabei zeigt Figur 1 ein Netzwerk oder Bussystem mit wenigstens einem ersten Teilnehmer und zweiten Mitteln, insbesondere einem zweiten Teilnehmer, zur Vorgabe eines Referenztaktes bzw. einer Referenztaktperiode.

Figur 2 zeigt ein Flussdiagramm zur Bildung des Teilungsfaktors oder Prescalers sowie des Angleichungswertes oder Offsets mit einem ersten Messfenster Local_Period und einem zweiten Messfenster Global_Period.

In Figur 3 ist nochmal eine Zeitdarstellung der Taktangleichung bzw. Taktperiodenangleichung offenbart, also der Synchronisation des wenigstens einen Teilnehmers über einen Zeitstrahl.

Beschreibung der Ausführungsbeispiele

Figur 1 zeigt ein Bussystem 103 mit einem ersten Teilnehmer 100 und einem weiteren Teilnehmer 101. Der ersten Teilnehmer 100 wird im Weiteren als der zu synchronisierende Teilnehmer beschrieben. Darin ist mit 104 ein Schnittstellenelement zur Kommunikationsverbindung 103 gezeigt. Weiterhin dargestellt ist ein Taktgeber 106 mit einer internen Taktquelle, beispielsweise ein Quarz 107. Weiterhin enthalten innerhalb des Zeitgebers 106 ist ein Zähler oder Counter 112. Des Weiteren ist mit 110 ein Baustein dargestellt, durch welchen die Synchronisation des Teilnehmers bzw. die Angleichung des Taktes durchgeführt werden kann. Optional kann dieser Baustein 110 bzw. die entsprechende Funktionalität auch im Zeitgeber 106 untergebracht sein. Teilnehmer 101 gilt im Weiteren als Referenzgeber, im speziellen Fall eines TTCAN-Systems als Timemaster, welcher über einen Schnittstellenbaustein 105 mit der Kommunikationsverbindung 103 in Verbindung steht. Der Zeitgeber 108 des Referenzteilnehmers, also des Timemaster im TTCAN-System, durch welchen die lokale Zeit diese Timemasters ermittelt wird, gilt somit als Referenzzeit für das gesamte Bussystem. D. h. der lokale Zeitgeber 108 des Referenzteilnehmers 101 gilt somit als globaler Zeitgeber des Bussystems. Auch hier ist eine lokale Taktquelle 109, insbesondere ein Quarz oder sonstige Zeitquelle dargestellt. Mit 113 ist auch hier ein Zähler oder Counter zur Erfassung der lokalen Zeitquelle dargestellt. Mit 111 ist hier optional ein weiterer Baustein dargestellt, beispielsweise ein Verarbeitungsbaustein oder Prozessor, durch welchen Nachrichten verschickt und empfangen bzw. ausgewertet werden können. Optional statt der Verwendung eines Referenzteilnehmers 101 kann auch ein Referenzzeitgeber 102 an der Kommunikationsverbindung angeschlossen sein, ebenfalls beispielsweise mit Zeitquelle 114 und Zählerbaustein 115. So kann die Referenzzeit für die Kommunikationsverbindung 103 bzw. das gesamte Bussystem ebenfalls von einfachen zweiten Mitteln, also nicht von einem Referenzteilnehmer, sondern einem einfachen Zeitgeberbaustein kommen.

Die Grundlage der Taktangleichung ist ein wiederkehrendes Ereignis, insbesondere ein regelmäßig wiederkehrendes Ereignis, das aber nicht unbedingt periodisch, also äquidistant wiederkehren muss, welches in allen Knoten eines Netzwerks beobachtet werden kann und welches als Referenzpunkt zur Vorgabe des Messzeitfensters bzw. der Messperiode dienen kann. Im Weiteren wird vorzugsweise der Begriff Messzeitfenster bzw. Messfenster verwendet, da, wie bereits angemerkt, eine Periodizität dieses Messzeitfensters, und damit also eine Messperiode nicht zwangsweise gegeben ist, aber möglich sein kann. Ereignisse zur Festlegung dieses Messzeitfensters sind Ereignisse, die in Zeitmaster, also dem Referenzteilnehmer 101 und dem wenigstens einen Zeitslave, also dem zu synchronisierenden Teilnehmer 100 gleichzeitig beobachtbar sind, wie dies z. B. im TTCAN-Netzwerk der start of frame der reference message, also der Referenznachricht ist. Der Teilnehmer 101, der den Referenztakt bereitstellt bzw. die Referenztaktperiode und mit diesem Referenztakt bzw. entsprechender Periode einen Zähler, insbesondere den Zähler 113 inkrementiert, sendet dann den zu diesem auftretenden Messereignis gesicherten Zählerstand des Zählers 113 an alle anderen Teilnehmer insbesondere zum Teilnehmer 100, die zu dem gleichen Messereignis den Stand des lokalen Zählers, beispielsweise 112, der mit ihrem lokalen Takt aus Taktquelle 107 inkrementiert wird, sichern. Eine solche Sicherung der Zählerstände kann in Speichern oder Registern erfolgen, die nicht explizit dargestellt sind, wobei sich die Speicher oder Register insbesondere im Zeitgeber 106 oder 108 selbst oder in weiteren Bausteinen wie 110 oder 111 oder auch separat enthalten sind. Die Differenzen der bei diesen aufeinanderfolgenden Messereignissen gesicherten Zählerständen geben dann die Länge der Messperiode zum Einen in Referenztaktperioden, also in der Einheit des Referenztaktes sowie beim zu synchronisierenden Teilnehmer in lokalen Taktperioden, also in der Einheit des lokalen Taktes an.

*Neben dem Quarz kann auch ein Oszillator, insbesondere ein VCO, als Takt- bzw. Zeitquelle eingesetzt werden.*

Der Referenztakt des Referenzgebers 101 wird im Weiteren als GT global timing bezeichnet. Der an den Referenztakt bzw. den Systemtakt anzugleichende bzw. damit zu synchronisierende lokale Takt wird im Weiteren als LT local timing bezeichnet. Die Periode des Referenztaktes GT wird mit G_NTU bezeichnet und die Periode des lokalen Taktes LT mit L_NTU. Der Teilungsfaktor oder Prescaler P, insbesondere der Istwert P_ist oder Prescaler_ist gibt an, wieviel Systemtaktperioden in einer bestimmten, in der Regel großen Anzahl N, $\in \mathbb{N}$ von lokalen Taktperioden L_NTU enthalten sind. Dabei ist N ein konstanter Wert, der das Verhältnis zwischen Prescaler, also dem Teilungsfaktor P und der lokalen Taktperiode L_NTU bestimmt. Die Länge der Messperiode, dargestellt oder gemessen in Einheiten der Periode des Referenztaktes G_NTU wird als Global_Period und das Pendant, also die Länge des Messzeitfensters, in Einheiten der lokalen Taktperiode L_NTU gemessen bzw. erfasst als Local_Period. Global_Period und Local_Period sind somit die Messfenster, also die entsprechenden Werte, die dann zur Ermittlung der Abweichung der lokalen Periodendauer L_NTU von der globalen Periodendauer G_NTU herangezogen werden. Die Abweichung selbst, also die Differenz Local_Period - Global_Period wird als Period_Diff bezeichnet. Erfindungsgemäß wird zum Prescaler oder Teilungsfaktor ein Offset oder Angleichungswert addiert bzw. davon subtrahiert, um zu erreichen, dass L_NTU und G_NTU nicht voneinander abweichen bzw. der mit Hilfe des Prescalers und Offsets generierte synchronisierte lokale Takt bzw. die synchronisierte lokale Taktperiode SL_NTU mit dem Referenztakt bzw. dem Systemtakt synchronisiert ist, insbesondere mit dem Referenztakt bzw. der Referenztaktperiode G_NTU übereinstimmt.

Alle hierbei genannten Werte sind ganze Zahlen, was eine zusätzliche Vereinfachung bei der Implementierung bewirkt.

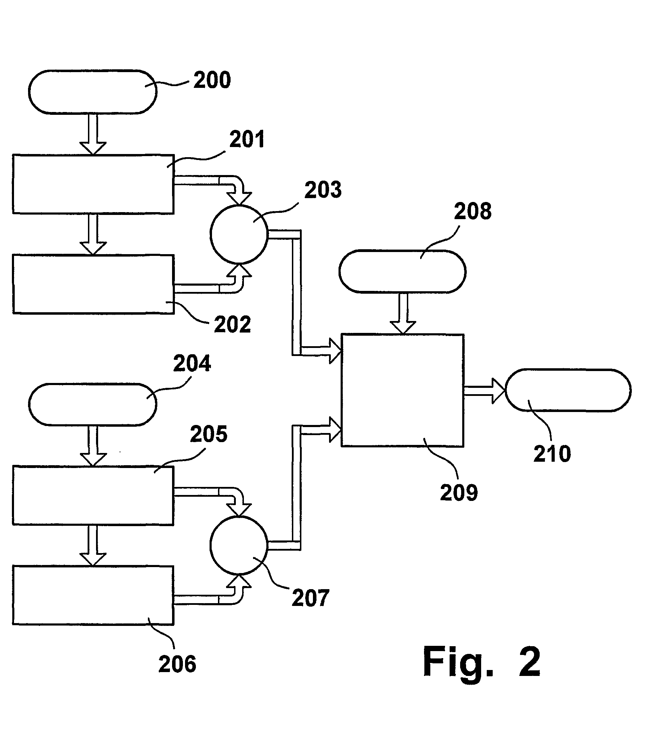

In Figur 2 wird nun die Synchronisation bzw. Angleichung ausführlich beschrieben, wobei die Angleichung regelmäßig wiederholt werden kann, um Schwankungen von Systemtakt bzw. Systemtaktperiode und Referenztakt bzw. Referenztaktperiode auszugleichen.

In Figur 2 wird vom Block 200 in Block 201 die Referenznachricht, also erfindungsgemäß der Counterwert des Referenzteilnehmers 101 im Block 201 als aktueller Referenzwert erfasst, beispielsweise bei Auftreten des ersten Messereignisses. Tritt das zweite eben als wiederkehrendes Messereignis auf, wird der vormals aktuelle Wert aus Block 201 in Block 202 als vorhergehender oder Previous-Referenzwert eingeschrieben und im Block 201 verbleibt der Counterwert des wiederkehrenden Messereignisses als aktueller Wert. Gleiches gilt für Block 204, 205 und 206 für den zu synchronisierenden Teilnehmer, welcher zum Messereignis seinen aktuellen Counterwert in Block 205 sichert und bei Auftreten des wiederkehrenden Messereignisses diesen Wert vom Block 205 in Block 206 überträgt und den neuen Counterwert zum Messereignis als aktuellen Wert im Block 205 einschreibt. D. h. in diesem Beispiel werden hier zunächst die beiden Messereignisse, das erstauftretende und das wiederkehrende abgewartet, um dann einen aktuellen Wert und einen vorhergehenden oder Previouswert vorliegen zu haben, mit welchem das Messzeitfenster ermittelt, also die Differenz gebildet werden kann.

Eine weitere Möglichkeit ist, als erstes Ereignis eine Konstante vorzusehen und diese Konstante als vorhergehenden oder Previouswert jeweils in den Blöcken 202 und 206 anzunehmen und das erste Messereignis, also den entsprechenden Counterwert als aktuellen Wert dann in Block 201 bzw. Block 205 für den Referenzteilnehmer bzw. den zu synchronisierenden Teilnehmer einzuschreiben.

Eine weitere Möglichkeit wäre, vor dem ersten Messereignis beide Werte, also den aktuellen sowie den vorhergehenden Previouswert, in den Blöcken 201 und 202 bzw. 205 und 206 beide auf konstante Werte zu setzen, wodurch dann eine erste vorgegebene Differenz für Global- und Local_Period, also die Messfenster verwendet wird.

Im Falle eines TTCAN-Systems erfolgt der Start mit dem Start des basic cycle, wobei die Counterwerte oder Zählerwerte beim start of frame des TTCAN gesichert (gecaptured) werden.

Es wird also allgemein, wenn ein neuer Counterwert ankommt, entsprechend dem auftretenden Messereignis, der vorherige Counterwert als Previous- oder vorhergehender Wert abgelegt, wodurch mit dem neuen Counterwert eine neue Differenz gebildet werden kann. So wird zu jedem Messereignis die Messfenster-Local_Period, also die Differenz der Counterwerte zu den Messereignissen aus Block 205 und 206 sowie das Messfenster Global_Period, also die Differenz der Counterwerte des Referenzteilnehmers zu den Messereignissen im Block 201 und Block 202 neu bestimmt. Diese Differenzbildung erfolgt im Block 203, wodurch hier die Global_Period, also das zweite Messfenster und im Block 207 die Local_Period, das erste Messfenster, entsteht. Beide Messfensterwerte, also in Einheit von Referenzzeitperioden bzw. Referenztaktperioden sowie von lokalen Taktperioden werden dann dem Block 209 zugeführt. Ebenfalls Block 209 zugeführt wird über Block 208 das bisherige Teilerverhältnis, der Teilungsfaktor P bzw. P_ist oder Prescaler_ist, welcher in die nachfolgende Ermittlung des neuen Teilungsfaktors oder Prescaler_soll im Block 209 eingeht.

Zunächst werden im Block 209 die beiden Werte Local_Period und Global_Period miteinander verglichen durch Bildung der Period_Diff, was bedeutet, wenn Period_Diff ungleich 0 ist, muss L_NTU an G_NTU angeglichen werden.

Die Angleichung erfolgt erfindungsgemäß dadurch, dass zu dem aktuellen Prescalerwert, Prescaler_ist oder P_ist ein Offset, ein Angleichungswert O addiert wird, um zu dem neuen Prescalerwert Prescaler_soll oder P_soll bzw. P zu gelangen. Dabei kann der Offset O positiv oder negativ oder auch im Falle der Period_Diff = 0, Null sein. Dies hängt vom Vorzeichen der Period_Diff ab.

Erfindungsgemäß gelten per Definition folgende Gleichungen immer:

$$\text{Global\_Period} * \text{G\_NTU} = \text{Local\_Period} * \text{L\_NTU} \qquad \text{(Gleichung 1)}$$

$$\text{G\_NTU} = \text{L\_NTU} * \text{Local\_Period/Global\_Period} \qquad \text{(Gleichung 2)}$$

$$N * \text{L\_NTU} = \text{P\_ist} * \text{NTU (System Clock Peroid)} \qquad \text{(Gleichung 3)}$$

$$N * \text{G\_NTU} = \text{P\_soll} * \text{NTU} \qquad \text{(Gleichung 4)}$$

Damit ergibt sich durch Umformung

$$\text{P\_soll} = \text{P\_ist} * \text{Local\_Period/Global\_Period} \qquad \text{(Gleichung 5)}$$

Mit der Umstellung des Korrekturfaktors auf einen Offset. Um zu einer einfachen realisierbaren Hardwarelösung zu gelangen, soll nun erreicht werden, dass:

$$\text{P\_soll} = \text{P\_ist} + O \qquad \text{(Gleichung 6)}$$

Somit ergibt sich für den Offset O aus den vorhergehenden Gleichungen

$$O = \text{P\_ist} * \text{Local\_Period/Global\_Period} - \text{P\_ist} \qquad \text{(Gleichung 8)}$$

und

$$O = \text{P\_ist} * (\text{Local\_Period/Global\_Period} - 1) \qquad \text{(Gleichung 9)}$$

Mit der bereits vorgesehenen Definition der Differenz Period_Diff aus Local_Period und Global_Period

$$\text{Period\_Diff} = \text{Local\_Period} - \text{Global\_Period} \qquad \text{(Gleichung 10)}$$

und der Darstellung des Offset

$$O = \text{P\_ist} * (((\text{Period\_Diff} + \text{Global\_Period})/\text{Global\_Period}) - 1) \qquad \text{(Gleichung 11)}$$

$$O = \text{P\_ist} * \text{Period\_Diff/Global\_Period} \qquad \text{(Gleichung 12)}$$

ergibt sich für den Offset

$$O = Period\_Diff * (P\_Ist/Global\_Period) \qquad \text{(Gleichung 13)},$$

also, dass der Wert des Offset oder des Angleichungswertes O von der Differenz Period_Diff und dem Verhältnis von P_ist zu Global_Period abhängt, wie dies bereits unter den Vorteilen der Erfindung und in den Ansprüchen beschrieben ist. Nun wird erfindungsgemäß der Quotient P_ist zu Global_Period über die dualen Logarithmen gebildet:

$$P\_ist/Global\_Period = 2^{ld(P\_ist) - ld(Global\_Period)} \qquad \text{(Gleichung 14)}.$$

Um nun zu einer weitergehenden, hardwarefreundlichen Näherung zu gelangen, werden erfindungsgemäß die dualen Logarithmen ld(P_ist) und ld(Global_Period) auf ganze Zahlen abgerundet, d. h. es werden für die jeweiligen Werte in binärer Darstellung anstelle des vollständigen dualen Logarithmus der Wert der höchstwertigen Stelle in dieser binären Darstellung verwendet, also des höchstwertigen Bits dieser Zahl, wodurch sich für den dualen Logarithmus des Teilungsfaktors ld(P_ist) der Wert ldPr und für den dualen Logarithmus des zweiten Messfensters ld(Global_Period) der Wert ldGP ergibt. Dabei ist $ldPr \leq ld(P\_ist)$ und $ldGP \leq ld(Global\_Period)$. Somit ergibt sich die Differenz aus Gleichung 14 mit den abgerundeten Werten, also den ganzen Zahlen entsprechend der höchstwertigen Bits des dualen Logarithmus die Gleichung:

$$Dld = (1dPr - 1dGP) - 1 \qquad \text{(Gleichung 19)}$$

wobei gilt:

$$(P\_ist/Global\_Period) / 4 \leq 2^{Dld} \leq P\_ist/Global\_Period \qquad \text{(Gleichung 15)}$$

Als weitere erfindungsgemäße Näherung ergibt sich somit für den Offset:

$$O = Period\_Diff * 2^{Dld} = shift(Period\_Diff, Dld) \qquad \text{(Gleichung 16)}$$

D. h. der Offset kann durch eine Schiebefunktion dargestellt werden, was bedeutet, dass die Differenz des ersten und zweiten Messfensters, also Period_Diff in binärer Darstellung um einzelne Stellen der binären Darstellung entsprechend der Differenz Dld des abgerundeten Wertes für den Teilungsfaktor ldPr des abgerundeten Wertes des zweiten Messfensters ldGP entsprechend verschoben wird. Im Falle einer positiven Differenz Dld in Richtung der höchstwertigen Stelle, was hier einer shift_left-Funktion entsprechen würde oder im Falle einer negativen Differenz Dld in Richtung der niedrigstwertigen Stelle, was einer shift_right-Funktion entsprechen würde, wenn man voraussetzt, dass die höchstwertigen Bits links und die niedrigstwertigen Bits rechts dargestellt werden. Bei der umgekehrten Darstellung kann die Verschiebefunktion entsprechend angewendet werden. Damit ergibt sich für den neuen Teilungsfaktor P bzw. P_soll unter Verwendung des gefundenen Offsets nun:

$$P\_soll = P\_ist + shift\_left(Period\_Diff, Dld) \qquad \text{(Gleichung 17)},$$

womit die Multiplikation und Division umgesetzt in eine Schiebefunktion und Addition sind. Damit ist es erfindungsgemäß einfach möglich, eine hardwarefreundliche Näherung zur Ermittlung des Teilungsfaktors P bzw. P_soll zu erzielen, welche einfach in einem IC implementiert werden kann.

Die durch den Offset bzw. den Angleichungswert O eingestellte Korrektur ist immer mit dem richtigen Vorzeichen versehen (vgl. Gleichung 13 und Gleichung 16). Vorteilhafter Weise wird die Korrektur auch nicht über den Zielwert selbst hinaus erfolgen, da aufgrund Gleichung 15 ein Überschwingen nicht möglich ist. Die vorgestellte Taktangleichung wird nach jedem Messereignis durchgeführt, wobei im Rahmen der Mess- und Einstellgenauigkeit jedes Mal wenigstens ein Viertel der verbleibenden Abweichung korrigiert wird, bis die verbliebene Period_Diff gegen 0 konvergiert. Wenn die Referenztaktperiode G_NTU kein ganzzahliges Vielfaches der Systemtaktperiode NTU ist, wird in diesem speziellen Fall die Period_Diff nicht bei 0 bleiben, sondern in einem kleinen Intervall um den Wert 0.

Alternativ kann zu Gleichung 15 die Differenz Dld der abgerundeten dualen Logarithmen auch als

$$Dld = (dlPr - dlGP) \qquad \text{(Gleichung 20)}$$

abgeschätzt werden, wobei dann gilt:

$$(P\_ist/Global\_Period) / 2 \leq 2^{Dld} \leq P\_ist/Global\_Period \qquad \text{(Gleichung 18)}$$

Diese alternative Abschätzung konvergiert noch schneller als die Abschätzung in der Differenzbildung nach Gleichung 19.

Entsprechend der Erfindung können nun alle Verfahren bzw. die entsprechenden Vorrichtungen und Bussysteme, die zur Angleichung eines lokalen Taktes bzw. einer lokalen Taktperiode auf einen Referenztakt bzw. eine Referenztaktperiode entsprechend dem Systemtakt bzw. der Systemtaktperiode eine einstellbare Größe verwenden, durch diese Erfindung abgedeckt werden. Das bedeutet, dass die Angleichung an die Referenztaktperiode bzw. den Referenztakt durch Addition eines Wertes, eben eines Angleichungswertes, insbesondere eines Offsets zu dieser einstellbaren Größe, durchführbar ist, wobei ein Näherungswert für den Angleichungswert unter Verwendung von gerundeten dualen Logarithmen der zur Verfügung stehenden Größen bestimmt wird.

Als weiterer Vorteil ergibt sich aus dem erfindungsgemäßen Verfahren bzw. der entsprechenden Vorrichtung und des Bussystems die Möglichkeit zur Durchführung einer Plausibilitätsprüfung, bei welcher der Angleichungswert, also der Offset O bzw. die Summe bzw. die Differenz aus dem Teilungsfaktor Prescaler P\_ist und dem Offset mit einem vorgegebenen Schwellwert verglichen werden, wobei dann die Taktangleichung entweder unterbleiben kann oder auf den Schwellwert begrenzt werden kann, falls der errechnete Offset den Schwellwert über- bzw. unterschreitet. D. h. die Summe oder Differenz von P\_ist und Offset, je nach Vorzeichen des Offset bzw. der Offset selbst können mit einem Schwellwert verglichen werden, der insbesondere als Maximum oder Minimum ausgebildet sein kann.

Bei einem vorgegebenen Maximalwert als Schwellwert wird bei Erreichen und/oder Überschreiten dieses Maximalwertes entweder die Taktangleichung ausgesetzt, also es unterbleibt eine weitere Anpassung des Angleichungswertes, oder aber der Angleichungswert bzw. die Summe aus P\_ist und Offset entsprechend des Vorzeichens des Offset werden auf diesen Maximalwert begrenzt. Gleiches gilt bei Erreichen oder Unterschreiten eines Minimalwertes als Schwellwert. Hier kann die Taktangleichung unterbleiben oder auf den Minimalwert beschränkt sein.

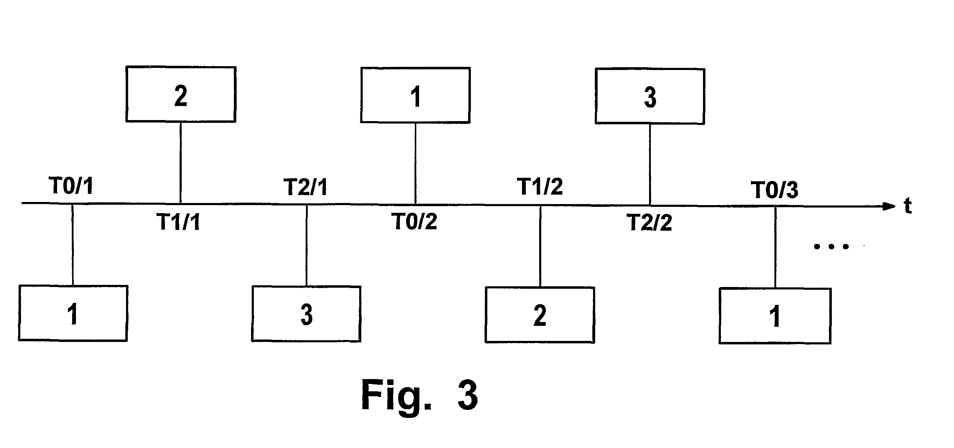

In Figur 3 ist noch einmal kurz anhand eines Zeitstrahls die Werteübernahme und Ermittlung des Teilungsfaktors dargestellt. Im Zeitpunkt T0/1 tritt das global im gesamten Bussystem beobachtbare Ereignis auf. D. h. zu diesem Zeitpunkt sichert der Referenzteilnehmer seinen Zählerwert sowie die anderen Teilnehmer den Zählerwert ihres lokalen Zählers. Diese Capturewerte oder gesicherten Zählerwerte werden zum Zeitpunkt T1/1 in Block 2 gültig. Ebenso in diesem Zeitpunkt wird der alte aktuelle Wert zum vorhergehenden oder Previouswert. D. h. der Referenzzählerwert, der in T0/1 oder Block 1 erfasst wurde, wird den anderen Teilnehmern über die Kommunikationsverbindung 103 bekanntgemacht. Im Zeitpunkt T2/1 oder Block 3 erfolgt dann die Neuberechnung bzw. Neuermittlung des Teilungsfaktors, also des P-Sollwertes durch Hinzunahme des Offsets zum P-Istwert, wie in Figur 2 beschrieben. Beispielsweise im TTCAN-System ist dieser Teilungsfaktor mit TUR Time Unit Ratio bezeichnet. Die vorgenannten Blöcke 1, 2 und 3 wiederholen sich dann zum Zeitpunkt T0/2, T1/2 und T2/2. Dieser Zyklus beginnt dann in T0/3 mit Block 1 erneut.

Durch Anwendung dieses Verfahrens, wie auch in Figur 3 beschrieben, konvergiert der Fehler, also der Taktunterschied bzw. der Taktperiodenunterschied oder Geschwindigkeitsunterschied gegen 0. Je nach Anwendung der Konvergenzgleichung mit Differenz Dld etwas schneller oder nicht ganz so schnell mit der Garantie, keine Überschwinger zu bekommen.

Somit kommt das Verfahren und die entsprechende Vorrichtung sowie das Bussystem mit entsprechender Vorrichtung ohne hardwareaufwendige Multiplikation oder Division aus, welche viel Implementationsaufwand benötigen würden. Zusätzlich wird eine, wie beschrieben, sehr einfache Plausibilitätsprüfung der ermittelten Werte möglich. Das Verfahren konvergiert vorteilhafter Weise darüber hinaus geometrisch, d. h. für alle praktischen Anwendungen sehr schnell. Damit können vorteilhafter Weise kleine Änderungen im Zielwert sehr schnell und sehr glatt verfolgt werden. An einem beispielsweise IC ist das Taktregelungsverfahren, wie eben beschrieben, durch Messung der Eingangs- und Ausgangstakte des Ics bzw. der von dem Ausgangstakt gesteuerten Funktionen des Ics erfassbar.

**Patentansprüche**

1. Verfahren zur Synchronisation wenigstens eines Teilnehmers (100) eines Bussystems (103), welches mit einer vorgebbaren Systemtaktperiode (NTU) betrieben wird, wobei eine lokale Taktperiode (LNTU) und eine Referenztaktperiode (GNTU) für den wenigstens einen Teilnehmer vorgegeben wird und die Referenztaktperiode (GNTU) mit der Systemtaktperiode (NTU) synchronisiert ist, wobei eine zur Systemtaktperiode (NTU) synchronisierte/ lokale Taktperiode (SLNTU) des wenigstens einen Teilnehmers dadurch erzeugt wird, dass die lokale Taktperiode (LNTU) mit einem Teilungsfaktor (P) verknüpft wird, wobei der Teilungsfaktor (P) ein Verhältnis der Referenztaktperiode (GNTU) zur lokalen Taktperiode (LNTU) wiedergibt, **dadurch gekennzeichnet, dass** der Teilungsfaktor (P) zur Synchronisation der lokalen Taktperiode (LNTU) mit der Systemtaktperiode (NTU) durch Addition oder Subtraktion eines Angleichungswertes (O) angepasst wird.

2. Verfahren nach Anspruch 1, **dadurch gekennzeichnet, dass** durch ein wiederkehrendes Ereignis ein Messzeitfenster (MT) vorgegeben wird, wobei dieses Messzeitfenster (MT) in einer Anzahl lokaler Taktperioden (LNTU) des wenigstens einen Teilnehmers als erstes, lokales Messfenster (Local_Period) und in einer Anzahl von Referenztaktperioden (GNTU) als zweites, globales Messfenster (Global_Period) erfasst wird und aus dem ersten (Local_Period) und dem zweiten Messfenster (Global_Period) eine Differenz (Period_Diff) ermittelt wird, wobei der Angleichungswert (O) mit Hilfe dieser Differenz (Period_Diff) bestimmt wird.

3. Verfahren nach Anspruch 1 und 2, **dadurch gekennzeichnet, dass** der Angleichungswert (O) außerdem von einem Verhältnis des Teilungsfaktors (P) zu dem zweiten Messfenster (Global_Period) abhängt und das Verhältnis unter Verwendung dualer Logarithmen abgebildet wird, wobei der duale Logarithmus des Teilungsfaktors (ldPist) und der duale Logarithmus des zweiten Messfensters (ldGlobal_Period) derart abgerundet werden, dass in binärer Darstellung anstelle des vollständigen dualen Logarithmus der Wert der höchstwertigen Stelle in binärer Darstellung verwendet wird, wodurch sich eine Differenz, Dld, entsprechend der jeweils höchstwertigen Stelle des abgerundeten Wertes für den Teilungsfaktor, ldPr, und des abgerundeten Wertes des zweiten Messfensters, ldGP, ergibt.

4. Verfahren nach Anspruch 3, **dadurch gekennzeichnet, dass** die Differenz, Dld, des abgerundeten Wertes für den Teilungsfaktor, ldPr, und des abgerundeten Wertes des zweiten Messfensters, ldGP, aus

$$Dld = (ldPr - ldGP) - 1$$

gebildet wird.

5. Verfahren nach Anspruch 3, **dadurch gekennzeichnet, dass** die Differenz, Dld, des abgerundeten Wertes für den Teilungsfaktor, ldPr, und des abgerundeten Wertes des zweiten Messfensters, ldGP, aus

$$Dld = (ldPr - ldGP)$$

gebildet wird.

6. Verfahren nach Anspruch 3, **dadurch gekennzeichnet, dass** der Angleichungswert (O) derart gebildet wird, dass die Differenz des ersten und zweiten Messfensters (Period_Diff) in binärer Darstellung um einzelne Stellen der binären Darstellung entsprechend der Differenz, Dld, des abgerundeten Wertes für den Teilungsfaktor, ldPr, und des abgerundeten Wertes des zweiten Messfensters, ldGP, im Falle einer positiven Differenz Dld in Richtung der höchstwertigen Stelle verschoben wird oder im Falle einer negativen Differenz, Dld, in Richtung der niedrigstwertigen Stelle.

7. Verfahren nach Anspruch 1, **dadurch gekennzeichnet, dass** eine Plausibilitätsüberprüfung derart durchgeführt wird, dass der Angleichungswert (O) und/oder die Summe und/oder die Differenz des Angleichungswertes (O) und des Teilungsfaktors (P) mit wenigstens einem vorgebbaren Schwellwert verglichen wird.

8. Verfahren nach Anspruch 7, **dadurch gekennzeichnet, dass** der wenigstens eine vorgebbare Schwellwert als Maximalwert vorgegeben wird und bei Erreichen und/oder Überschreiten dieses Maximalwertes eine weitere Synchronisation durch Anpassung des Angleichungswertes (O) unterbleibt oder der Angleichungswert (O) und/oder die Summe des Angleichungswertes (O) und des Teilungsfaktors (P) auf den Maximalwert begrenzt wird.

9. Verfahren nach Anspruch 7, **dadurch gekennzeichnet, dass** der wenigstens eine vorgebbare Schwellwert als Minimalwert vorgegeben wird und bei Erreichen und/oder Unterschreiten dieses Minimalwertes eine weitere Synchronisation durch Anpassung des Angleichungswertes (O) unterbleibt oder der Angleichungswert (O) und/oder die Differenz des Angleichungswertes (O) und des Teilungsfaktors (P) auf den Minimalwert begrenzt wird.

10. Vorrichtung zur Synchronisation wenigstens eines Teilnehmers (100) eines Bussystems (103), welches mit einer vorgebbaren Systemtaktperiode (NTU) betrieben wird, wobei erste Mittel eine lokale Taktperiode (LNTU) vorgeben und zweite Mittel eine Referenztaktperiode (GNTU) für den wenigstens einen Teilnehmer vorgeben und die Referenztaktperiode (GNTU) mit der Systemtaktperiode (NTU) synchronisiert ist, wobei dritte Mittel enthalten sind welche eine zur Systemtaktperiode (NTU)synchronisierte/ lokale Taktperiode (SLNTU) des wenigstens einen Teilnehmers dadurch erzeugen, dass die lokale Taktperiode (LNTU) mit einem Teilungsfaktor (P) verknüpft wird, wobei der Teilungsfaktor (P) ein Verhältnis der Referenztaktperiode (GNTU) zur lokalen Taktperiode (LNTU) wiedergibt, **dadurch gekennzeichnet, dass** vierte Mittel enthalten sind, welche den Teilungsfaktor (P) zur Synchronisation der lokalen Taktperiode (LNTU) mit der Systemtaktperiode (NTU) durch Addition oder Subtraktion eines Angleichungswertes (O) anpassen.

11. Vorrichtung nach Anspruch 10, **dadurch gekennzeichnet, dass** Mittel enthalten sind, welche wenigstens ein Verfahren gemäß einem der Ansprüche 1 bis 9 durchführen, wobei die Mittel in hardware ausgeführt sind.

12. Bussystem (103) mit einer Vorrichtung zur Synchronisation wenigstens eines ersten Teilnehmers (100) des Bussystems, wobei das Bussystem mit einer vorgebbaren Systemtaktperiode (NTU) betrieben wird, wobei erste Mittel eine lokale Taktperiode (LNTU) vorgeben und zweite Mittel, insbesondere ein zweiter Teilnehmer, eine Referenztaktperiode (GNTU) für den wenigstens einen ersten Teilnehmer vorgeben und die Referenztaktperiode (GNTU) mit der Systemtaktperiode (NTU) synchronisiert ist, wobei dritte Mittel enthalten sind welche eine zur Systemtaktperiode (NTU) synchronisierte/ lokale Taktperiode (SLNTU) des wenigstens einen ersten Teilnehmers dadurch erzeugen, dass die lokale Taktperiode (LNTU) mit einem Teilungsfaktor (P) verknüpft wird, wobei der Teilungsfaktor (P) ein Verhältnis der Referenztaktperiode (GNTU) zur lokalen Taktperiode (LNTU) wiedergibt, **dadurch gekennzeichnet, dass** vierte Mittel enthalten sind, welche den Teilungsfaktor (P) zur Synchronisation der lokalen Taktperiode (LNTU) mit der Systemtaktperiode (NTU) durch Addition oder Subtraktion eines Angleichungswertes (O) anpassen.

## Claims

1. Method for synchronizing at least one subscriber (100) of a bus system (103) which is operated with the aid of a prescribable system clock period (NTU), a local clock period (LNTU) and a reference clock period (GNTU) being prescribed for the at least one subscriber, and the reference clock period (GNTU) being synchronized to the system clock period (NTU) , a local clock period (SLNTU), synchronized in relation to the system clock period (NTU), of the at least one subscriber being generated by virtue of the fact that the local clock period (LNTU) is combined with a division factor (P), the division factor (P) reproducing a ratio of the reference clock period (GNTU) to the local clock period (LNTU), **characterized in that** the division factor (P) is adapted for synchronizing the local clock period (LNTU) with the system clock period (NTU) by adding or subtracting an adaptation value (O).

2. Method according to Claim 1, **characterized in that** a measuring. time window (MT) is prescribed by a recurring event, this measuring time window (MT) being detected in a number of local clock periods (LNTU) of the at least one subscriber as first, local measuring window (Local_Period), and being detected in a number of reference clock periods (GNTU) as second, global measuring window (Global_Period), and a difference (Period_Diff) being determined from the first (Local_Period) and the second measuring window (Global_Period), the adaptation value (O) being determined with the aid of this difference (Period_Diff).

3. Method according to Claims 1 and 2, **characterized in that** the adaptation value (O) further depends on a ratio of the division factor (P) to the second measuring window (Global_Period), and the ratio is mapped using dual logarithms, the dual logarithm of the division factor (ldPist) and the dual logarithm of the second measuring window (ldGlobal_Period) being rounded in such a way that, in a binary representation, instead of the complete dual logarithm use is made of the value of the most significant digit in binary representation, as a result of which a difference, Dld, corresponding to the respective most significant digit of the rounded value results for the division factor, ldPr, and of the rounded value of the second measuring window, ldGP.

4. Method according to Claim 3, **characterized in that** the difference, Dld, of the rounded value for the division factor, ldPr, and of the rounded value of the second measuring window, ldGP, is formed from

$$Dld = (ldPr - ldGP) - 1.$$

**5.** Method according to Claim 3, **characterized in that** the difference, Dld, of the rounded value for the division factor, ldPr, and of the rounded value of the second measuring window, ldGP, is formed from

$$Dld = (ldPr - ldGP).$$

**6.** Method according to Claim 3, **characterized in that** the adaptation value (O) is formed in such a way that the difference of the first and second measuring windows (Period_Diff) in binary representation is displaced by individual digits of the binary representation in accordance with the difference, Dld, of the rounded value for the division factor, ldPr, and of the rounded value of the second measuring window, ldGP, in the case of a positive difference Dld in the direction of the most significant digit, or in the direction of the least significant digit in the case of a negative difference, Dld.

**7.** Method according to Claim 1, **characterized in that** a plausibility check is carried out in such a way that the adaptation value (O) and/or the sum and/or the difference of the adaptation value (O) and the division factor (P) is compared with at least one prescribable threshold value.

**8.** Method according to Claim 7, **characterized in that** the at least one prescribable threshold value is prescribed as a maximum value, and when this maximum value is reached and/or exceeded further synchronization by adapting the adaptation value (O) is suppressed, or the adaptation value (O) and/or the sum of the adaptation value (O) and the division factor (P) is limited to the maximum value.

**9.** Method according to Claim 7, **characterized in that** the at least one prescribable threshold value is prescribed as a minimum value, and when this minimum value is reached and/or undershot further synchronization by adapting the adaptation value (O) is suppressed, or the adaptation value (O) and/or the difference of the adaptation.value (O) and the division factor (P) is limited to the minimum value.

**10.** Device for synchronizing at least one subscriber (100) of a bus system (103) which is operated with the aid of a prescribable system clock period (NTU), first means prescribing a local clock period (LNTU), and second means prescribing a reference clock period (GNTU) for the at least one subscriber, and the reference clock period (GNTU) being synchronized with the system clock period (NTU), there being included third means which generate a local clock period (SLNTU), synchronized in relation to the system clock period (NTU), of the at least one subscriber by virtue of the fact that the local clock period (LNTU) is combined with a division factor (P), the division factor (P) reproducing a ratio of the reference clock period (GNTU) to the local clock period (LNTU), **characterized in that** fourth means are included which adapt the division factor (P) for synchronizing the local clock period (LNTU) with the system clock period (NTU) by adding or subtracting an adaptation value (O).

**11.** Device according to Claim 10, **characterized in that** means are included which carry out at least one method in accordance with one of Claims 1 to 9, in which the means are embodied in hardware.

**12.** Bus system (103) having a device for synchronizing at least one first subscriber (100) of the bus system, the bus system being operated with the aid of a prescribable system clock period (NTU), first means prescribing a local clock period (LNTU), and second means, in particular a second subscriber, prescribing a reference clock period (GNTU) for the at least one first subscriber, and the reference clock period (GNTU): being synchronized with the system clock period (NTU), there being included third means which generate a local clock period (SLNTU), synchronized in relation to the system clock period (NTU), of the at least one first subscriber by virtue of the fact that the local clock period (LNTU) is combined with a division factor (P), the division factor (P) reproducing a ratio of the reference clock period (GNTU) to the local clock period (LNTU), **characterized in that** fourth means are included which adapt the division factor (P) for synchronizing the local clock period (LNTU) with the system clock period (NTU) by adding or subtracting an adaptation value (O).

**Revendications**

**1.** Procédé pour synchroniser l'au moins un participant (100) d'un système de bus (103) qui fonctionne avec une période élémentaire du système (NTU) prédéterminable, selon lequel une période élémentaire locale (LNTU) et une période élémentaire de référence (GNTU) pour l'au moins un participant sont prédéterminées et la période élémentaire de référence (GNTU) est synchronisée à la période élémentaire du système (NTU), selon lequel une période élémentaire locale (SLNTU) - synchronisée par rapport à la période élémentaire du système (NTU) - de l'au moins un participant est produite en liant la période élémentaire locale (LNTU) à un facteur de division (P), selon lequel le facteur de division (P) reproduit un rapport de la période élémentaire de référence (GNTU) par rapport à la période élémentaire locale (LNTU),
**caractérisé en ce que**
le facteur de division (P) pour synchroniser la période élémentaire locale (LNTU) à la période élémentaire du système (NTU) est adapté en additionnant ou en soustrayant une valeur d'harmonisation (O).

2. Procédé selon la revendication 1,
**caractérisé en ce qu'**
une fenêtre de temps de comptage (MT) est prédéterminée par un événement récurrent, cette fenêtre de temps de comptage (MT) étant enregistrée dans un certain nombre de périodes élémentaires locales (LNTU) de l'au moins un participant en tant que première fenêtre de temps de comptage locale (Loca1_Period) et dans un certain nombre de périodes élémentaires de référence (GNTU) en tant que deuxième fenêtre de comptage globale (Global_Period), et on établit une différence (Period_Diff) à partir de la première fenêtre de comptage (Local_Period) et de la deuxième (Global_Period), la valeur d'harmonisation (O) étant déterminée à l'aide de cette différence (Period_Diff).

3. Procédé selon la revendication 1 et 2,
**caractérisé en ce que**
la valeur d'harmonisation (O) dépend en outre d'un rapport du facteur de division (P) par rapport à la deuxième fenêtre de comptage (Global_Period) et le rapport est formé en ayant recours à des logarithmes binaires, le logarithme binaire du facteur de division (IdPist) et le logarithme binaire de la deuxième fenêtre de comptage (1dGlobal_Period) étant arrondis de telle manière qu'en représentation binaire on utilise au lieu du logarithme binaire complet la valeur du chiffre le plus élevé en représentation binaire, ce qui donne une différence DId qui correspond au chiffre à chaque fois le plus élevé de la valeur arrondie pour le facteur de division ldPr et de la valeur arrondie de la deuxième fenêtre de comptage IdGP.

4. Procédé selon la revendication 3,
**caractérisé en ce que**
la différence DId de la valeur arrondie pour le facteur de division ldPr et de la valeur arrondie de la deuxième fenêtre de comptage ldGP est formée de la façon suivante :

$$DId = (IdPr - IdGP) - 1.$$

5. Procédé selon la revendication 3,
**caractérisé en ce que**
la différence DId de la valeur arrondie pour le facteur de division ldPr et de la valeur arrondie de la deuxième fenêtre de comptage ldGP est formée de la façon suivante :

$$DId = (IdPr - IdGP).$$

6. Procédé selon la revendication 3,
**caractérisé en ce que**
1a valeur d'harmonisation (O) est formée de telle manière que la différence de la première et de la deuxième fenêtre de comptage (Period_Diff) en représentation binaire est décalée de quelques chiffres de la représentation binaire en fonction de la différence DId de la valeur arrondie pour le facteur de division ldPr et de la valeur arrondie de la deuxième fenêtre de comptage ldGP, en direction du chiffre le plus élevé au cas où la différence DId est positive, ou en direction du chiffre le plus bas au cas où la différence DId est négative.

7. Procédé selon la revendication 1,
**caractérisé en ce qu'**
un contrôle de vraisemblance est réalisé de telle sorte que la valeur d'harmonisation (O) et/ou la somme et/ou la différence de la valeur d'harmonisation (O) et du facteur de division (P) est comparée à au moins une valeur seuil prédéterminable.

8. Procédé selon la revendication 7,
   **caractérisé en ce que**
   la au moins une valeur seuil prédéterminable est prédéterminée en tant que valeur maximale et, lorsqu'on atteint et/ou qu'on dépasse vers le haut cette valeur maximale, il n'y a pas d'autre synchronisation par adaptation de la valeur d'harmonisation (O), ou on limite à la valeur maximale la valeur d'harmonisation (O) et/ou la somme de la valeur d'harmonisation (O) et du facteur de division (P).

9. Procédé selon la revendication 7,
   **caractérisé en ce que**
   la au moins une valeur seuil prédéterminable est prédéterminée en tant que valeur minimale et, lorsqu'on atteint et/ou qu'on dépasse vers le bas cette valeur minimale, il n'y a pas d'autre synchronisation par adaptation de la valeur d'harmonisation (O), ou on limite à la valeur minimale la valeur d'harmonisation (O) et/ou la différence de la valeur d'harmonisation (O) et du facteur de division (P).

10. Dispositif pour synchroniser l'au moins un participant (100) d'un système de bus (103) qui fonctionne avec une période élémentaire du système (NTU) prédéterminable, dans lequel de premiers moyens prédéterminent une période élémentaire locale (LNTU) et de deuxièmes moyens une période élémentaire de référence (GNTU) pour l'au moins un participant et la période élémentaire de référence (GNTU) est synchronisée à la période élémentaire du système (NTU), dans lequel des troisièmes moyens produisent une période élémentaire locale (SLNTU) - synchronisée par rapport à la période élémentaire du système (NTU) - de l'au moins un participant en liant la période élémentaire locale (LNTU) à un facteur de division (P), dans lequel le facteur de division (P) reproduit un rapport de la période élémentaire de référence (GNTU) par rapport à la période élémentaire locale (LNTU),
    **caractérisé en ce que**
    des quatrièmes moyens adaptent le facteur de division (P) pour synchroniser la période élémentaire locale (LNTU) à la période élémentaire du système (NTU) en additionnant ou en soustrayant une valeur d'harmonisation (O).

11. Dispositif selon la revendication 10,
    **caractérisé en ce qu'**
    il comporte des moyens qui exécutent au moins un procédé selon l'une des revendications 1 à 9, les moyens prenant la forme de matériel informatique.

12. Système de bus (103) comportant un dispositif pour synchroniser au moins un premier participant (100) du système de bus, dans lequel le système de bus fonctionne avec une période élémentaire du système (NTU) prédéterminable, dans lequel des premiers moyens prédéterminent une période élémentaire locale (LNTU) et des deuxièmes moyens, en particulier un deuxième participant, une période élémentaire de référence (GNTU) pour l'au moins un premier participant et la période élémentaire de référence (GNTU) est synchronisée à la période élémentaire du système (NTU), des troisièmes moyens produisent une période élémentaire locale (SLNTU) - synchronisée par rapport à la période élémentaire du système (NTU) - de l'au moins en participant en liant la période élémentaire locale (LNTU) à un facteur de division (P), le facteur de division (P) reproduisant un rapport de la période élémentaire de référence (GNTU) par rapport à la période élémentaire locale (LNTU),
    **caractérisé en ce que**
    des quatrièmes moyens adaptent le facteur de division (P) pour synchroniser la période élémentaire locale (LNTU) à la période élémentaire du système (NTU) en additionnant ou en soustrayant une valeur d'harmonisation (O).

Fig. 1

**Fig. 2**

Fig. 3